Europäisches Patentamt

European Patent Office

Office européen des brevets

(19)

(11) Publication number: **0 397 611**
**A1**

# (12) EUROPEAN PATENT APPLICATION

(21) Application number: **90830186.4**

(22) Date of filing: **30.04.90**

(51) Int. Cl.⁵: **G01P 1/04, F16C 1/08**

(30) Priority: **12.05.89 IT 2107089 U**

(43) Date of publication of application:
**14.11.90 Bulletin 90/46**

(84) Designated Contracting States:
**DE ES FR GB**

(71) Applicant: **CAVIS CAVETTI ISOLATI S.p.A.**
**Via Roma, 31**
**I-15023 Felizzano (Alessandria)(IT)**

(72) Inventor: **Codrino, Giuseppe, Cavis Cavetti**
**Isolati S.p.A.**
**Via Roma, 31**
**I-15023 Felizzano (Alessandria)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Flexible driving member for motor vehicle speedometers.**

(57) A flexible driving member for motor vehicle speedometers comprises a hollow shaft (1) which can be coupled to the drive assembly and a rotary core member (3), encompassed by outer sheath (4), one end of which is locked in a shaped bush (6) thereon there is resiliently engaged a ring-nut (10) which can be removably coupled, by means of a bayonet type of coupling (11, 11'), to the hollow shaft (1).

*Fig.1*

## BACKGROUND OF THE INVENTION

The present invention relates to a flexible driving member for motor vehicle speedometers, which comprises a quick bayonet coupling for coupling it to the drive assembly.

As is known, the speed of a vehicle is usually measured by measuring the angular speed of a rotary member of the vehicle, which angular speed is related by a known ratio to the speed to be measured.

For example, conventional motor vehicle speedometers are so designed and arranged as to automatically detect, from the motor vehicle transmission speed, the running speed which is displayed on a suitable display.

For coupling the speed sensing member arranged between the motor vehicle transmission assembly and speed display, there is usually adopted a screw type of coupling from the drive side and a fixed joint from the display instrument side.

Accordingly, as the flexible speed sensing member is to be removed, for any operating reasons, it is necessary to disassemble this member from the display instrument, since, as stated, the mentioned flexible speed sensing member is coupled to the drive assembly by means of a screw type of coupling.

Thus, for screwing off the flexible member from the drive assembly it is necessary to preliminarly disengage that end portion of the flexible member which is coupled to the display instrument.

The latter, on the other hand, is usually mounted on the motor vehicle dashboard to which there are further connected a plurality of electrical cables provided for controlling a conventional set of display instruments.

Thus, as the speed sensing flexible element is coupled to the mentioned speed display instrument or disengaged therefrom, the electrical cables of the other adjoining display instruments can be negatively affected.

## SUMMARY OF THE INVENTION

Accordingly, the aim of the present invention is to overcome the above mentioned drawbacks, by providing a flexible driving member, for motor vehicle speedometers, which can be quickly and easily disengaged from the drive assembly without the need of removing the end portion of the flexible member which is coupled to the speed display instrument.

Within the scope of the above mentioned aim, a main object of the present invention is to provide such a flexible driving member for motor vehicle speedometers which is very simple construction wise and very reliable in operation.

Another object of the present invention is to provide such a flexible driving member for motor vehicle speedometers which can be coupled to the drive assembly and the speed display instruments, and disengaged therefrom, in a very quick and easy way.

According to the invention, the above aim and objects, as well as yet other objects, which will become more apparent hereinafter, are achieved by a flexible driving member for motor vehicle speedometers, characterized in that said flexible driving member substantially comprises a hollow shaft which can be coupled to a drive assembly, and a rotary core member, encompassed by a sheath, one end of said core member being locked in a bush member thereon there is resiliently engaged a nut member, with a bayonet coupling, adapted to engage with said hollow shaft.

## BRIEF DESCRIPTION OF THE DRAWINGS

Further characteristics and advantages of the flexible driving member according to the invention will become more apparent from the following detailed description of a preferred, though not exclusive, embodiment thereof, which is illustrated, by way of an indicative but not limitative example, in the figures of the accompanying drawings, where:

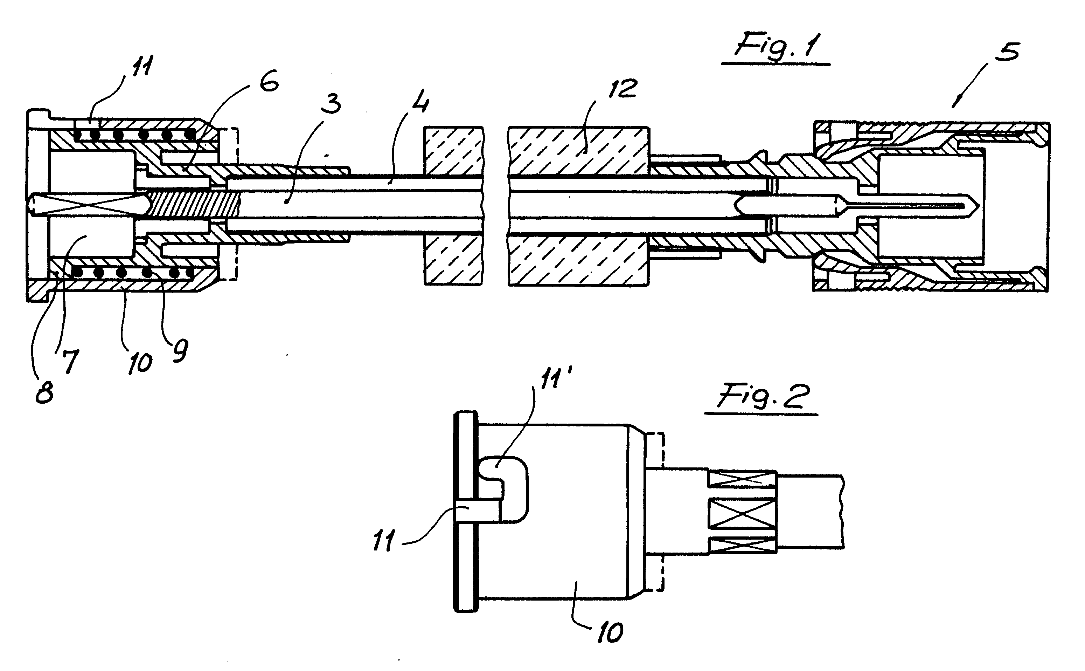

Figure 1 is a longitudinal cross-sectional view of the flexible member according to the invention;

Figure 2 shows a ring nut member provided with a bayonet coupling included in the subject flexible member; and

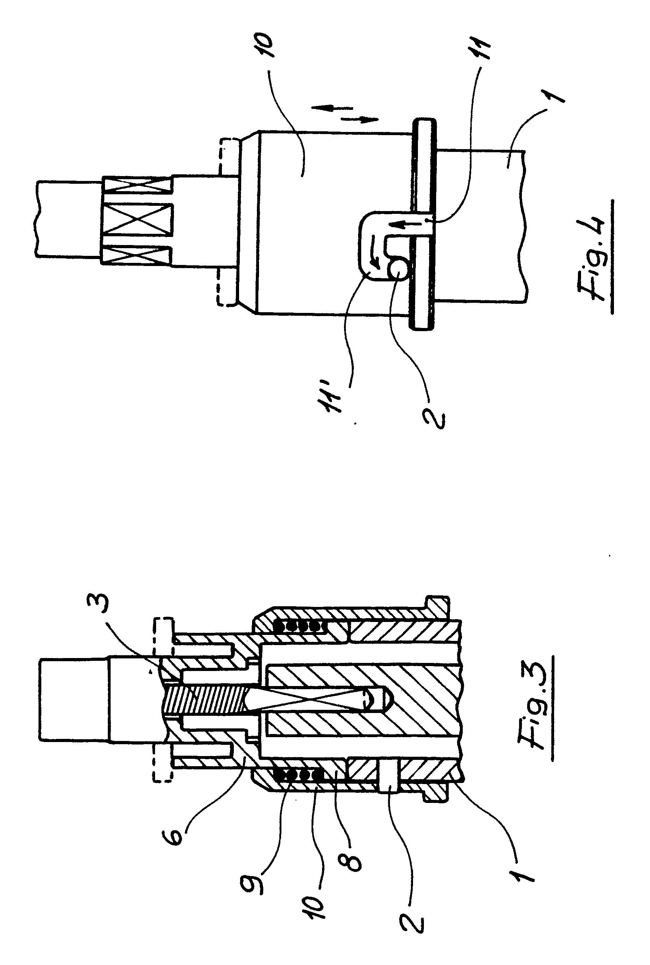

Figures 3 and 5 schematically show a possible procedure for coupling the ring nut member to a hollow shaft associated with a drive assembly.

## DESCRIPTION OF THE PREFERRED EMBODIMENT

With reference to the figures of the accompanying drawings, the flexible driving member for motor vehicle speedometers according to the present invention, comprises a hollow shaft 1 including a radially projecting pin 2 and which can be firmly coupled, by means of a helical type of coupling,to a drive assembly conventionally consisting of the motor vehicle transmission.

The rotary core member 3, which provides the driving member proper, is encompassed by a flexible sheath 4 at one portion of which, that is the portion which is to be coupled to the speed display instrument, there is engaged a conventional type of coupling member, overally indicated at the reference number 5.

On the opposite end portion of the sheath 4 there is fixedly engaged a bush 6 which is provided with a cylindrical recess 7 adapted to receive the free portion of the mentioned hollow shaft.

On this bush, having a perimetrical detent abutment 8, there is fitted,through the interposition of a pressing coil spring 9, a ring nut member 10 through the wall of which there is formed a slot 11 including an end curved portion 11′ providing a bayonet type of coupling.

Thus, by engaging the mentioned ring nut member, restraining the bush 6, on the hollow shaft 1 and pressing on said ring nut member, so as to overcome the biassing of the spring 9, there is obtained, by partially turning said ring nut member, a mutual coupling of the two portions, in which the pin 2 of the hollow shaft is caused to automatically engage, with a stable equilibrium, in the curved portion 11′ of the slot 11.

It should be apparent that the flexible resilient member can be disengaged from the hollow shaft by reversely operating, in a correspondingly quick and simple way.

In this connection it should be pointed out that the sheath 4 is advantageously coated by a sound dampening tube 12 made of foamed polyethylene or the like.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A flexible driving member for motor vehicle speedometers, characterized in that said flexible driving member substantially comprises a hollow shaft which can be coupled to a drive assembly and a rotary core, encompassed by a sheath, one end of which is locked in a bush member thereon there is resiliently engaged a ring-nut member, with a bayonet coupling adapted to engage with said hollow shaft.

2. A flexible driving member, according to claim 1, characterized in that said hollow shaft is provided with a radially projecting pin and is adapted to be firmly restrained, preferably by means of a helical type of coupling, to said drive assembly.

3. A flexible driving member, according to the preceding claims, characterized in that said rotary core member is encompassed by a flexible sheath at one end of which there is arranged a conventional type of coupling member.

4. A flexible driving member, according to one or more of the preceding claims, characterized in that said bush is provided with a cylindrical recess adapted to engage with a free end portion of said hollow shaft, on said bush, which further in cludes a perimetrical detent abutment, there being engaged, through the interposition of a compression coil spring, a ring nut member through the wall of which there is provided a slot including a curved end portion defining a bayonet type of coupling.

5. A flexible driving member,for motor vehicle speedometers, according to the preceding claims, characterized in that said sheath is encompassed by a sound dampening tube made of foamed polyethylene or the like.

Fig.1

Fig.2

_Fig.4_

_Fig.3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 074 253 (OSTERHOUDT)<br>* Whole document * | 1,2,4 | G 01 P 1/04<br>F 16 C 1/08 |
| A | | 3 | |
| X | US-A-3 411 813 (KREUZ)<br>* Column 2, lines 20-53; fig. * | 1,2,4 | |
| A | FR-A-1 087 713 (LYON-FLEX)<br>* Whole document * | 1,2,4 | |
| A | FR-A-1 152 440 (JAEGER)<br>* Whole document * | 3 | |
| P,A | EP-A-0 347 389 (TECAFLEX)<br>* Column 1, lines 29-37 * | 5 | |
| A | FR-A-1 035 899 (DAIMLER-BENZ)<br>* Whole document * | 5 | |

TECHNICAL FIELDS SEARCHED (Int. Cl.5)

F 16 C
G 01 P

The present search report has been drawn up for all claims

| Place of search | Date of completion of the search | Examiner |
|---|---|---|
| THE HAGUE | 18-07-1990 | ORTHLIEB CH.E. |